# EUROPÄISCHE PATENTANMELDUNG

(11) **EP 1 852 299 A1**
(43) Veröffentlichungstag der Anmeldung: **07.11.2007**
(21) Anmeldenummer: 07007664.1
(22) Anmeldetag: 14.04.2007
(51) Int. Cl.: B60K 15/04, B60K 15/05

(54) **Kraftfahrzeug mit einer schwenkbar gelagerten Tankklappe**

(30) Priorität: 09.09.2006 DE 102006042447; 06.05.2006 DE 102006021183
(71) Anmelder: Bayerische Motoren Werke Aktiengesellschaft, 80809 München (DE)
(72) Erfinder: Münch, Matthias, 24558 Henstedt-Ulzburg (DE); Heydenreich, Bertram, 85579 Neubiberg (DE); Schroeter, Gunter, 80806 München (DE)

(57) **Zusammenfassung**

Es ist eine Anordnung einer schwenkbar gelagerten Tankklappe an einem Kraftfahrzeug bekannt, die mittels einer Verriegelungseinrichtung in ihrer geschlossenen Stellung gehalten ist. Der Tankklappe ist eine Antriebsvorrichtung zugeordnet, durch welche die Tankklappe nach dem Lösen der Verriegelungseinrichtung selbsttätig in ihre Betankungsstellung aufklappt. Aufgabe der Erfindung ist es, eine Anordnung einer schwenkbar gelagerten Tankklappe an einem Kraftfahrzeug zu schaffen, die eine komfortable Betankung ermöglicht.

Erfindungsgemäß kann die Tankklappe (1) durch eine Antriebseinheit (6) aus der geschlossenen Stellung in die geöffnete Stellung verschwenkt werden, wobei ein Federelement (3) vorgespannt wird. Durch dieses vorgespannte Federelement (3) kann die Tankklappe (1) aus der geöffneten Stellung wieder in die geschlossene Stellung zurück verschwenkt werden. Damit kann die Tankklappe (1) automatisch geöffnet und geschlossen werden, ohne dass die verschmutzte Tankklappe (1) berührt werden muss, sodass eine sehr komfortable Betankung möglich ist.

## Beschreibung

Die Erfindung betrifft ein Kraftfahrzeug mit einer schwenkbar gelagerten Tankklappe nach dem Oberbegriff des Patentanspruchs 1.

Bereits um 1950 wurden in den USA Patente zur automatischen Betankung von Kraftfahrzeugen angemeldet. Seitdem befasst man sich mit der Thematik, Fahrzeuge automatisch zu betanken. Auch die neu aufkommende Wasserstofftechnologie und der sichere Umgang dabei mit dem Medium Wasserstoff beschleunigt die Entwicklung automatischer Betankungssysteme. Erste Pilotprojekte, wie die weltweit erste Wasserstoff Robottankstelle am Münchener Flughafen, an der der Benutzer beim Betankungsvorgang nicht mehr aus seinem Fahrzeug aussteigen muss, weil der gesamte Vorgang automatisch abläuft, bestätigen diesen Trend. Neben der Sicherheit beim Betanken erbringt eine solche Automatisierung einen großen Komfortgewinn. Doch dies sind nur vereinzelte Projekte. Ansonsten erfolgt die Betankung bisher ausschließlich manuell. Doch gerade die Außenhaut des Fahrzeugs unterliegt im hohen Maße der Verschmutzung. Im Bereich der Tankklappe kommt es sogar noch zu einer zusätzlichen Verschmutzung durch Kraftstoffe. Diese als unangenehm empfundene Verschmutzung wird bei einem manuellen Betankungsvorgang unvermeidlich auf die Hände übertragen. Um diesen Umstand zu verbessern, entstand der Wunsch ein Einfüllsystem am Fahrzeug zu entwickeln, welches neben der Vermeidung von Verschmutzung einen deutlich verbesserten Komfort beim Betanken ermöglicht.

Aus der EP 1 281 558 A2 ist eine Anordnung einer schwenkbar gelagerten Tankklappe an einem Kraftfahrzeug bekannt, die mittels einer Verriegelungseinrichtung in ihrer geschlossenen Stellung gehalten ist. Der Tankklappe ist eine Antriebsvorrichtung zugeordnet, durch welche die Tankklappe nach dem Lösen der Verriegelungseinrichtung selbsttätig in ihre Betankungsstellung aufklappt.

Aufgabe der Erfindung ist es, eine Anordnung einer schwenkbar gelagerten Tankklappe an einem Kraftfahrzeug zu schaffen, die eine komfortable Betankung ermöglicht.

Diese Aufgabe wird mit einem Kraftfahrzeug mit einer schwenkbar gelagerten Tankklappe mit den Merkmalen des Patentanspruchs 1 gelöst.

Erfindungsgemäß kann die Tankklappe durch eine Antriebseinheit aus der geschlossenen Stellung in die geöffnete Stellung verschwenkt werden, wobei ein Federelement vorgespannt wird. Durch dieses vorgespannte Federelement kann die Tankklappe aus der geöffneten Stellung wieder in die geschlossene Stellung zurück verschwenkt werden. Damit kann die Tankklappe automatisch geöffnet und geschlossen werden, ohne dass die verschmutzte Tankklappe berührt werden muss, sodass eine sehr komfortable Betankung möglich ist. Die Antriebseinheit kann elektrisch, pneumatisch oder hydraulisch arbeiten. Denkbar ist auch der Einsatz einer Formgedächtnislegierung als Antriebseinheit. Die Antriebseinheit kann direkt im Bereich der Lagerung der Tankklappe angeordnet sein.

Bevorzugt ist die Antriebseinheit durch ein Kopplungselement mit der Tankklappe verbunden. Dadurch kann die Antriebseinheit räumlich entfernt von der Tankklappe angeordnet sein, sodass Packageprobleme vermieden werden können. Günstigerweise ist das Kopplungselement zumindest ein Bowdenzug, ein Gestänge oder ein Draht. Ein solches Kopplungselement gewährleistet eine hohe Flexibilität für die Positionierung der Antriebseinheit.

Die Antriebseinheit kann idealerweise zusätzlich eine Verriegelungseinrichtung betätigen, die die geschlossene Tankklappe verriegelt, und die vor dem Verschwenken der Tankklappe aus der geschlossenen Stellung in die geöffnete Stellung durch die Antriebseinheit entriegelt wird. Auf diese Weise ist kein separater Antrieb mehr für die Verriegelungseinrichtung der Tankklappe erforderlich. Zwischen der Verriegelungseinrichtung und der Antriebseinheit kann ebenfalls ein Kopplungselement angeordnet sein, wenn dies aus bauraumtechnischen Gründen erforderlich ist. Alternativ kann die Antriebseinheit neben der Verriegelungseinrichtung angeordnet und über ein Kopplungselement mit der Tankklappe verbunden werden.

Die erfindungsgemäße, automatische Tankklappe ist mit hohem Komfort verbunden. Dennoch ist wahrscheinlich nicht jeder Fahrzeugkäufer bereit, die damit verbundenen Mehrkosten zu tragen. Deshalb würde es Sinn machen, die automatische Tankklappe als zusätzlich auswählbare Sonderausstattung anzubieten. Um die damit verbundenen Kosten möglichst gering zu halten, ist es wichtig, dass möglichst viele Bauteile gleichermaßen bei der erfindungsgemäßen automatischen Tankklappe als auch bei einer konventionellen, manuell zu bedienenden Tankklappe verwendet werden können, sodass möglichst wenig Invest für zusätzliche Werkzeuge erforderlich ist. Die erfindungsgemäße Ausführung ermöglicht es, die eigentliche Tankklappe als Gleichteil sowohl bei der manuellen als auch bei der automatischen Ausführung zu verwenden. Die Antriebseinheit und die Verriegelungseinrichtung können als zusätzliche Montageteile dargestellt werden. Die beiden Systeme unterscheiden sich somit lediglich in dem Montageumfang.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine Prinzipdarstellung einer automatisch öffen- und schließbaren Tankklappe an einem Kraftfahrzeug,
- Fig. 2: eine Prinzipdarstellung einer Notentriegelung für die in Fig. 1 gezeigte Tankklappe,
- Fig. 3: eine perspektivische Darstellung einer Verriegelungseinrichtung, die die in Fig. 1 gezeigte Tankklappe in der geschlossenen Stellung verriegeln kann,
- Fig. 4: eine Draufsicht auf die in Fig. 2 gezeigte Verriegelungseinrichtung und
- Fig. 5: eine Prinzipdarstellung der Tankklappe analog zu Fig. 1, jedoch mit räumlich getrennter Anordnung der Verriegelungseinrichtung.

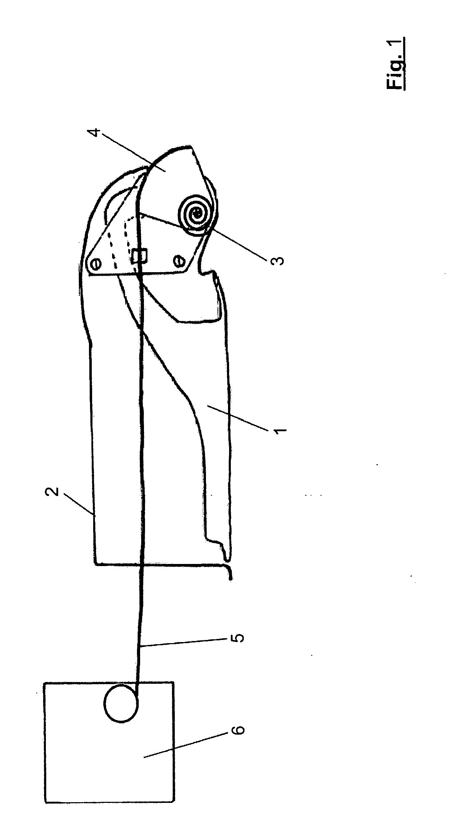

In Fig. 1 ist eine Tankklappe 1 dargestellt, die an einer Kraftfahrzeugkarosserie schwenkbar gelagert ist. Die Tankklappe 1 dient zur außenhautbündigen Abdekkung sowohl eines Abdecktopfes 2 als auch eines Einfüllrohres und eines Tankverschlusses. Der Abdecktopf 2 ist als Multifunktionsteil ausgelegt und bildet die Mulde in der Karosserie, die ein Tankeinfüllrohr und die Scharnierachsanbindung für die Tankklappe 1 aufnimmt. Die Funktionen Abdichtung zum Fahrzeuginneren, Sichtschutz ins Fahrzeuginnere, Auffangbehälter für überlaufenden Kraftstoff sowie der Verschmutzungsschutz sind in ihm vereint. Da der Abdecktopf 2 üblicherweise versenkt in der Karosserie angeordnet ist, gewährleistet die Tankklappe 1, dass dieser optisch und aerodynamisch nicht störend wirkt.

Die Tankklappe 1 wird durch eine Rückstellfeder 3 unter ständiger Vorspannung in die dargestellte geschlossene Stellung gedrückt. Nahe bei der Schwenkachse der Tankklappe 1 ist an dieser ein Kreisbogensegment 4 angebunden, an dem ein Ende ein dünnes Drahtseil 5 angebracht ist. Das andere Ende des Drahtseils 5 ist mit einer Antriebseinheit 6 verbunden. Die Antriebseinheit 6 besteht aus einem Elektromotor mit einem Schneckenantrieb und einer Wickelwelle, auf die das Drahtseil zumindest teilweise aufgewickelt werden kann. Wenn nun die Antriebseinheit 6 das Drahtseil 5 etwas aufwickelt, verschwenkt das Kreisbogensegment 4 und mit diesem die Tankklappe 1. Auf diese Weise wird entgegen der Kraft der Rückstellfeder 3 die Tankklappe 1 geöffnet, und die Rückstellfeder 3 wird dabei gespannt. Zum Schließen der Tankklappe 1 wickelt die Antriebseinheit 6 den aufgewickelten Abschnitt des Drahtseils 5 wieder ab. Die Rückstellfeder 3 drückt die Tankklappe 1 dann wieder in die geschlossene Stellung und hält so das Drahtseil 5 gespannt.

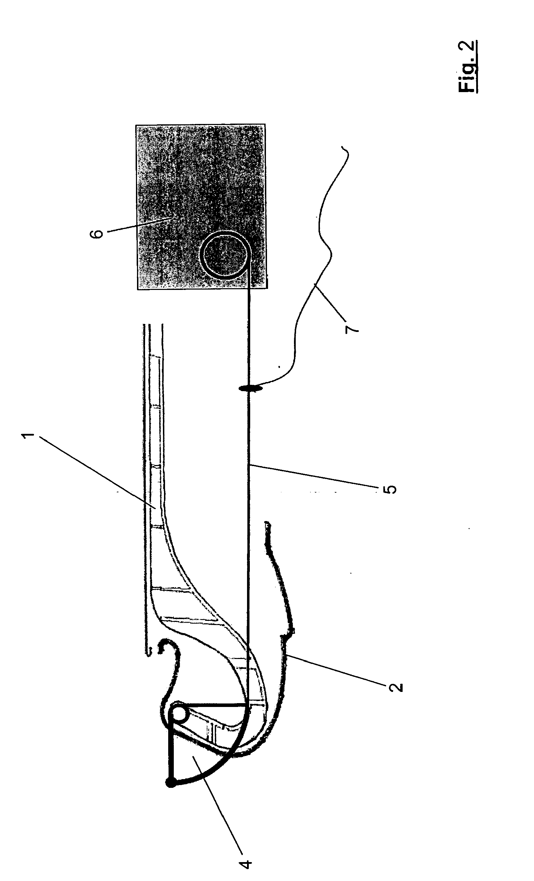

Die Tankklappe 1 weist zudem - wie in Fig. 2 dargestellt - eine manuelle Notbetätigung auf, sodass sie auch bei einem Ausfall der Elektrik oder Elektronik von Hand geöffnet und geschlossen werden kann. Dazu ist mit dem Drahtseil 5 zwischen dem Kreisbogensegment 4 und der Antriebseinheit 6 ein Ende eines Notentriegelungsseils 7 verbunden, das im Kofferraum des Kraftfahrzeugs endet. Wenn an diesem Notentriegelungsseil 7 von Hand angezogen wird, öffnet sich ebenfalls entgegen der Kraft der Rückstellfeder 3 die Tankklappe 1.

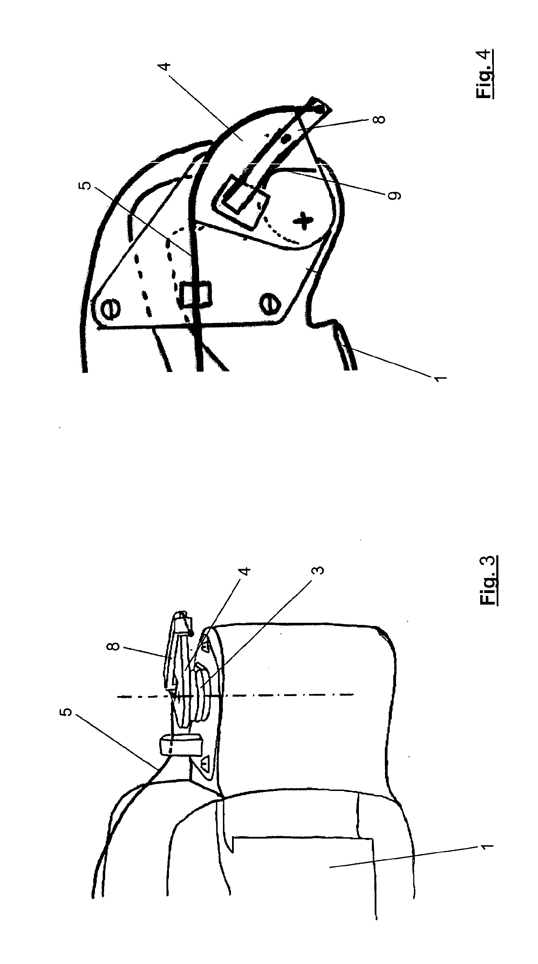

Zusätzlich weist die Tankklappe 1 eine Verriegelungseinrichtung auf, deren Funktionsweise in Fig. 3 und Fig. 4 erkennbar ist. Die Verriegelungseinrichtung besteht aus einem Hebel 8, der auf dem Kreisbogensegment 4 angelenkt ist. Der Hebel 8 kann dabei nur zwischen zwei durch Anschläge begrenzten Winkelstellungen verschwenkt werden, wobei der Hebel 8 durch eine Blattfeder 9 stets in eine der beiden Endstellungen gedrückt wird. Das eine Ende des Hebels 8 ist mit einer nicht dargestellten Sperrklinke verbunden, die die Tankklappe 1 in ihrer geschlossenen Stellung verriegelt, wenn der Hebel 8 in der Endstellung ist, in der er durch die Blattfeder 8 gedrückt wird. Am anderen Ende des Hebels 8 ist das Drahtseil 5 angebunden. Dabei ist zum Verschwenken des Hebels 8 entgegen der Kraft der Blattfeder 9 deutlich weniger Kraft erforderlich als zum Verschwenken des Kreisbogensegments 4 zusammen mit der Tankklappe 1 entgegen der Kraft der Rückstellfeder 3.

Wenn nun zum Öffnen der Tankklappe 1 die Antriebseinheit 6 beginnt, das Drahtseil 5 aufzuwickeln, verschwenkt zunächst der Hebel 8 entgegen der Kraft der Blattfeder 9. Dadurch wird die Sperrklinke geöffnet, sodass die Tankklappe 1 nicht mehr verriegelt ist. Bei einem weiteren Aufwickeln des Drahtseils stößt der Hebel 8 an dem Anschlag an, sodass der Hebel 8 nicht mehr weiter verschwenken kann. Beim weiteren Aufwickeln verschwenkt daher das Kreisbogensegment 4 zusammen mit der Tankklappe 1 entgegen der Kraft der Rückstellfeder 3.

Beim Schließen der Tankklappe 1 dagegen wird das Drahtseil 5 wieder abgewickelt. Aufgrund der stärkeren Federkraft der Rückstellfeder 3 gegenüber der Blattfeder 9 verschwenkt zunächst die Tankklappe 1 zusammen mit dem Kreisbogensegment zurück in ihre geschlossene Stellung. Anschließend verschwenkt der Hebel 8 auf dem Kreisbogensegment 4 durch die Federkraft der Blattfeder 8 zurück in die andere Endstellung, in der die Rastklinke die Tankklappe 1 wieder verriegelt.

Auf diese Weise kann elegant eine Verriegelung der Tankklappe 1 in den Mechanismus zum automatischen Öffnen und Schließen der Tankklappe 1 integriert werden. Eine zusätzliche Verriegelungseinrichtung, die mit einer Zentralverriegelung des Kraftfahrzeugs verbunden ist, ist nicht erforderlich. Wenn die beschriebene automatische Tankklappe 1 als Sonderausstattung angeboten wird, bietet es sich daher an, die Antriebseinheit 6 dort anzuordnen, wo bei einer konventionellen Tankklappe die Verriegelungseinrichtung vorgesehen ist, die mit der Zentralverriegelung gekoppelt ist. Auf diese Weise entstehen bei der automatischen Tankklappe 1 keine Bauraumprobleme.

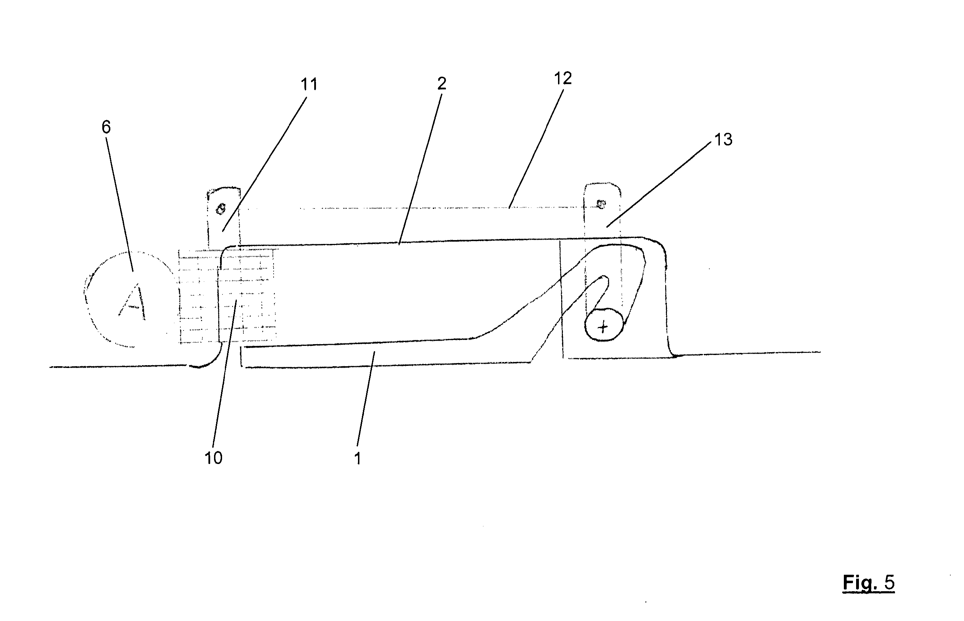

In Fig. 5 ist eine alternative Ausführung der automatischen Tankklappe 1 dargestellt. Die Verriegelungseinrichtung 10 ist räumlich von der Anlenkung der Tankklappe 1 getrennt auf der gegenüberliegenden Seite im Abdecktopf 2 angeordnet. Die Antriebseinheit 6 ist unmittelbar neben der Verriegelungseinrichtung 10 untergebracht. Bei Betätigung der Antriebseinheit 6 wird die Verriegelungseinrichtung 10 geöffnet, sodass die Tankklappe 1 in der geschlossenen Stellung nicht mehr verriegelt ist. Zugleich bewirkt die Betätigung der Antriebseinheit 6 ein Verschwenken eines Hebels 11, an dem ein Ende eines Zugseils 12 angebunden ist. Das andere Ende des Zugseils 12 ist mit einem weiteren Hebel 13 verbunden, der mit der Tankklappe 1 gekoppelt ist. Durch das Verschwenken des Hebels 11 beim Betätigen der Antriebseinheit 6 verschwenkt aufgrund des Zugseils 12 auch der Hebel 13 und öffnet so die Tankklappe 1 gegen die Kraft einer nicht dargestellten Feder.

## Patentansprüche

1. Kraftfahrzeug mit einer schwenkbar gelagerten Tankklappe (1), die zwischen einer geschlossenen und einer geöffneten Stellung verlagerbar ist, **dadurch gekennzeichnet, dass** die Tankklappe (1) durch eine Antriebseinheit (6) aus der geschlossenen Stellung in die geöffnete Stellung verschwenkt werden kann, wobei ein Federelement (3) vorgespannt wird, und dass durch das vorgespannte Federelement (3) die Tankklappe (1) aus der geöffneten Stellung in die geschlossene Stellung zurück verschwenkt werden kann.

2. Kraftfahrzeug nach Anspruch 1, **dadurch gekennzeichnet, dass** die Antriebseinheit (6) im Bereich der Lagerung der Tankklappe (1) angeordnet ist.

3. Kraftfahrzeug nach Anspruch 1, **dadurch gekennzeichnet, dass** die Antriebseinheit (6) durch ein Kopplungselement (5) mit der Tankklappe (1) verbunden ist.

4. Kraftfahrzeug nach Anspruch 3, **dadurch gekennzeichnet, dass** das Kopplungselement (5) zumindest ein Bowdenzug, ein Gestänge oder ein Draht ist.

5. Kraftfahrzeug nach einem der vorhergehenden Ansprüche, **dadurch gekennzeichnet, dass** die Antriebseinheit (6) zusätzlich eine Verriegelungseinrichtung betätigt, die die geschlossene Tankklappe (1) verriegelt, und die vor dem Verschwenken der Tankklappe (1) aus der geschlossenen Stellung in die geöffnete Stellung durch die Antriebseinheit (6) entriegelt wird.

6. Kraftfahrzeug nach Anspruch 5, **dadurch gekennzeichnet, dass** die Antriebseinheit (6) neben der Verriegelungseinrichtung angeordnet ist und über das Kopplungselement (5) mit der Tankklappe (1) verbunden ist.

7. Kraftfahrzeug nach einem der vorhergehenden Ansprüche, **dadurch gekennzeichnet, dass** die Tankklappe (1) eine manuell bedienbare Notbetätigung aufweist.

8. Kraftfahrzeug nach einem der Ansprüche 3 bis 6 und nach Anspruch 7, **dadurch gekennzeichnet, dass** die Notbetätigung aus einem Zugseil (7) besteht, das mit dem Kopplungselement (5) verbunden ist.
